(19) Europäisches Patentamt
European Patent Office
Office européen des brevets

(11) **EP 2 476 029 B1**

(12) **EUROPÄISCHE PATENTSCHRIFT**

(45) Veröffentlichungstag und Bekanntmachung des Hinweises auf die Patenterteilung:
**03.07.2013 Patentblatt 2013/27**

(21) Anmeldenummer: **09778477.1**

(22) Anmeldetag: **08.09.2009**

(51) Int Cl.:
***G04G 7/00*** *(2006.01)*

(86) Internationale Anmeldenummer:
**PCT/EP2009/006600**

(87) Internationale Veröffentlichungsnummer:
**WO 2011/029461 (17.03.2011 Gazette 2011/11)**

(54) **ZEITSYNCHRONISATION IN AUTOMATISIERUNGSGERÄTEN**

TIME SYNCHRONIZATION IN AUTOMATION DEVICES

SYNCHRONISATION TEMPORELLE DANS DES APPAREILS D'AUTOMATISATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**18.07.2012 Patentblatt 2012/29**

(73) Patentinhaber: **Siemens Aktiengesellschaft 80333 München (DE)**

(72) Erfinder: **NEUMANN, Götz 13627 Berlin (DE)**

(56) Entgegenhaltungen:
**EP-A1- 1 126 341      EP-A1- 1 280 024**
**EP-A2- 1 143 312      WO-A2-99/66377**

**Beschreibung**

Die Erfindung betrifft ein Verfahren zur Zeitsynchronisation in einem Automatisierungsgerät sowie ein entsprechend eingerichtetes Automatisierungsgerät.

Automatisierungsgeräte, wie sie beispielsweise bei der Automatisierung von energietechnischen Anlagen als Leitgeräte oder Schutzgeräte eingesetzt werden, weisen heutzutage üblicherweise mehrere interne Baugruppen auf, die eigene Mikrocontrollereinrichtungen zur Erfassung und Verarbeitung von Daten umfassen. Zur Abarbeitung komplexer Steuer- oder Schutzfunktionen sowie zur Durchführung einer hochgenauen Zeitstempelung erfasster Datenwerte (z.B. Messwerte) ist es vonnöten, dass auf allen Baugruppen eines Automatisierungsgeräts hoch genau miteinander synchronisierte Zeitgeber vorhanden sind, das heißt einerseits, dass die Impulse der jeweiligen Zeittakte auf den einzelnen Baugruppen (im Folgenden "Baugruppen-Zeittakte") synchron und im gleichen Zeitabstand auftreten, und andererseits, dass eine Uhrzeitinformation zum gleichen Zeitpunkt auf allen Baugruppen des Automatisierungsgerätes den gleichen Wert besitzt.

Neben einer dauerhaften Überwachung der Zeitsynchronisation im laufenden Betrieb des Automatisierungsgerätes stellt sich insbesondere hinsichtlich der Anlaufphase, also der unmittelbar auf das Einschalten bzw. das Wiedereinschalten eines Automatisierungsgerätes oder einer seiner Baugruppen folgenden Zeitphase, die Anforderung, binnen möglichst kurzer Zeit eine Zeitsynchronisation zwischen den einzelnen Baugruppen des Automatisierungsgerätes herzustellen.

Zur Gewährleistung einer Zeitsynchronisation wurden bisher beispielsweise Verfahren eingesetzt, bei denen die Zeittakte und Uhrzeitinformationen der einzelnen Baugruppen mittels über ein deterministisches Kommunikationsnetz bidirektional übermittelter Datentelegramme erfolgt, die in regelmäßigen Abständen versendet werden. Aufgrund übereinstimmender Telegrammlaufzeiten in Hin- und Rückrichtung kann auf jeder Baugruppe auf die aktuelle Uhrzeit einer Master-Uhr geschlossen werden. Bezüglich einer Schaltanlage im Bereich der Hoch- und Mittelspannung ist ein solches Verfahren beispielsweise aus der europäischen Patentanmeldung EP 1 143 312 A2 bekannt.

Nachteilig bei dem bekannten Verfahren ist die Notwendigkeit eines deterministischen Kommunikationsnetzes, also eines Kommunikationsnetzes, bei dem die Übermittlung eines Datentelegramms von einem Sender zu einem Empfänger innerhalb einer vorgegebenen konstanten Zeitdauer erfolgen muss.

Außerdem ist aus der EP 1 126 341 A1 ein Zeitsynchronisiersystem bekannt, bei dem mittels eines GPS-Empfängers ein externes Zeitsignal empfangen wird. Der GPS-Empfänger ermittelt ein Referenz-Zeitsynchronisiersignal und ein absolutes Zeitsynchronisiersignal und gibt diese Signale an einen Zeitsignalverteiler ab. Dieser ermittelt ein Referenzzeitsignal und verteilt dieses an mehrere Endgeräte.

Der Erfindung liegt die Aufgabe zu Grunde, ein Verfahren anzugeben, mit dem mit vergleichsweise geringem Aufwand und insbesondere geringen Anforderungen an ein Kommunikationsmittel eine Zeitsynchronisation innerhalb eines Automatisierungsgerätes möglich ist.

Diese Aufgabe wird erfindungsgemäß durch ein Verfahren zur Zeitsynchronisation in einem Automatisierungsgerät gelöst, bei dem ein auf einer ausgewählten Baugruppe des Automatisierungsgerätes erzeugter Basis-Zeittakt an zumindest eine weitere Baugruppe des Automatisierungsgerätes übermittelt und zur Synchronisation eines Baugruppen-Zeittaktes der zumindest einen weiteren Baugruppe mit einem Baugruppen-Zeittakt der ausgewählten Baugruppe verwendet wird, wobei die folgenden Schritte durchgeführt werden: Die Impulse des Basis-Zeittaktes werden je einem ersten Zähler der ausgewählten und der zumindest einen weiteren Baugruppe zugeführt und bewirken dort ein inkrementelles Verringern des Zählerstandes des jeweiligen ersten Zählers; die Impulse des Basis-Zeittaktes werden je einem zweiten Zähler der ausgewählten und der zumindest einen weiteren Baugruppe zugeführt und bewirken dort ein inkrementelles Erhöhen des Zählerstandes des jeweiligen zweiten Zählers; bei Erreichen eines Zählerstandes mit dem Wert 0 des jeweiligen ersten Zählers wird jeweils ein Zeitimpuls generiert, aus dem der jeweilige Baugruppen-Zeittakt erzeugt wird; als Reaktion auf den Zeitimpuls werden auf der ausgewählten und der zumindest einen weiteren Baugruppe der Zählerstand des jeweiligen zweiten Zählers in einem Speicher abgelegt und ein in jeweils einem Neustart-Speicher vorhandener Neustart-Zählerwert in den jeweiligen ersten Zähler übernommen; als Reaktion auf den Zeitimpuls wird auf der ausgewählten Baugruppe zusätzlich ein Zeitsteuertelegramm erzeugt, das den aktuell in dem Speicher abgelegten Zählerstand des zweiten Zählers der ausgewählten Baugruppe enthält, und an die zumindest eine weitere Baugruppe übermittelt; auf der zumindest einen weiteren Baugruppe wird der mit dem Zeitsteuertelegramm empfangene Zählerstand des zweiten Zählers der ausgewählten Baugruppe mit dem Zählerstand des jeweiligen eigenen zweiten Zählers verglichen; aus dem Unterschied zwischen den jeweiligen Zählerständen wird ein Korrekturwert bestimmt; und der Korrekturwert wird zum Herstellen der Zeitsynchronisation für einen einmaligen Durchlauf des jeweiligen ersten Zählers zu dem in dem jeweiligen Neustart-Speicher der zumindest einen weiteren Baugruppe vorhandenen Neustart-Zählerwerts addiert.

Einerseits kann durch die Übertragung des Basis-Zeittaktes von der ausgewählten Baugruppe an die zumindest eine weitere Baugruppe in dem Automatisierungsgerät das Vorhandensein eines identischen Basis-Zeittaktes auf allen Baugruppen gewährleistet werden. Aufgrund der geringen räumlichen Ausdehnung eines üblichen Automatisierungsgerätes treten relevante Laufzeitunterschiede bei der Übermittlung des Basis-Zeittaktes an die einzelnen weiteren Baugruppen nicht auf. Somit kann der an die einzelnen Baugruppen übermittelte Basis-Zeittakt von dem ersten Zähler jeder Baugruppe dazu verwendet werden, Zeitimpulse zu generieren, die in definierten gleichen Zeitabständen erzeugt werden. Zur Synchronisierung der Zeitpunkte, zu denen diese Zeitimpulse erzeugt werden, ist der zweite Zähler vorgesehen, dessen Zählerstand immer bei der Erzeugung eines Zeitimpulses gespeichert wird. Durch Vergleich der Zählerstände kann für jede der weiteren Baugruppen ein Korrekturwert ermittelt werden, der einmalig auf den Neustart-Zählerwert addiert wird und somit für einen Durchlauf des ersten Zählers die Zeitdauer bis zum folgenden Zeitimpuls um den Korrekturwert verlängert. Nach dieser Korrektur erfolgt die Erzeugung der Zeitimpulse auf der ausgewählten Baugruppe und der zumindest einen weiteren Baugruppe gleichzeitig.

An ein Kommunikationsmedium, mit dem das Zeitsteuertelegramm von der ausgewählten Baugruppe an die mindestens eine weitere Baugruppe übertragen wird, werden von dem erfindungsgemäßen Verfahren keine besonderen Anforderungen gestellt, insbesondere muss das Kommunikationsmedium kein deterministisches Übertragungsverhalten aufweisen.

Eine vorteilhafte Ausführungsform des erfindungsgemäßen Verfahrens sieht vor, dass der Neustart-Zählerwert derart gewählt wird, dass unter Berücksichtigung der Frequenz des Basis-Zeittaktes das Erzeugen des Zeitimpulses jeweils nach Ablauf einer ausgewählten Zeitdauer erfolgt, und als Reaktion auf den jeweiligen Zeitimpuls der Wert eines jeweiligen Baugruppen-Zeitgebers der ausgewählten und der zumindest einen weiteren Baugruppe um einen der Zeitdauer entsprechenden Zeitschritt erhöht wird.

Auf diese Weise können durch geeignete Wahl einerseits der Frequenz des Basis-Zeittaktes und andererseits des Neustart-Zählerwertes Zeitimpulse in jedem gewünschten Zeitabstand erzeugt werden, beispielsweise lässt sich bei Verwendung eines Basis-Zeittaktes mit einer Frequenz von 1000 MHz und der Wahl eines Neustart-Zählerwertes mit dem Wert 1000 die Generierung der Zeitimpulse im Abstand von 1 Millisekunde erreichen.

Um eine Korrektur des Baugruppen-Zeittaktes in möglichst feinen Abstufungen vornehmen zu können, wird gemäß einer weiteren vorteilhaften Ausführungsform des erfindungsgemäßen Verfahrens vorgeschlagen, dass die Impulse des Basis-Zeittaktes auf der ausgewählten und der zumindest einen weiteren Baugruppe je einem Multiplikatorbaustein zugeführt werden, der eine Vervielfachung der Frequenz des Zeittaktes um den Wert F vornimmt; und der entsprechend erhöhte Basis-Zeittakt als Zeittakt für den jeweiligen ersten Zähler verwendet wird.

Je höher nämlich der für den jeweiligen ersten Zähler verwendete Zeittakt ist, desto genauer lässt sich eine Verschiebung des Zeitpunktes der Erzeugung eines Zeitimpulses auf einer Baugruppe durch Addition des entsprechenden Korrekturwertes erzeugen.

Eine weitere vorteilhafte Ausführungsform des erfindungsgemäßen Verfahrens sieht außerdem vor, dass eine weitere ausgewählte Baugruppe vorhanden ist, die zur Erzeugung eines entsprechenden Basis-Zeittaktes eingerichtet ist, und bei Ausfall des Basis-Zeittaktes der ersten ausgewählten Baugruppe die weitere ausgewählte Baugruppe ihren Basis-Zeittakt an die zumindest eine weitere Baugruppe übermittelt und die bisher von der ersten ausgewählten Baugruppe durchgeführten Schritte zur Zeitsynchronisation ausführt.

Hierdurch kann erreicht werden, dass auch bei Ausfall des Basis-Zeittaktes der ersten ausgewählten Baugruppe, beispielsweise durch einen Defekt der kompletten Baugruppe, die weiteren Baugruppen in kurzer Zeit an den Baugruppen-Zeittakt einer redundant vorhandenen ausgewählten Baugruppe angepasst werden können.

Die oben genannte Aufgabe wird auch durch ein Automatisierungsgerät mit zumindest zwei internen Baugruppen gelöst, wobei eine ausgewählte der beiden Baugruppen zur Erzeugung eines Basis-Zeittaktes und zur Übermittlung des Basiszeittaktes an die zumindest eine weitere Baugruppe eingerichtet ist und die ausgewählte und die zumindest eine weitere Baugruppe zur Durchführung eines Verfahrens zur Zeitsynchronisation entsprechend einem der Ansprüche 1 bis 4 eingerichtet sind.

Die Erfindung soll im Folgenden anhand von Ausführungsbeispielen näher erläutert werden. Hierzu zeigen

Figur 1　ein Ausführungsbeispiel eines Automatisierungsgerätes mit zwei internen Baugruppen; und

Figur 2　ein Zeitdiagramm, in dem der Verlauf von Zeitimpulsen der Baugruppen-Zeittakte einer ausgewählten und einer weiteren Baugruppe dargestellt ist.

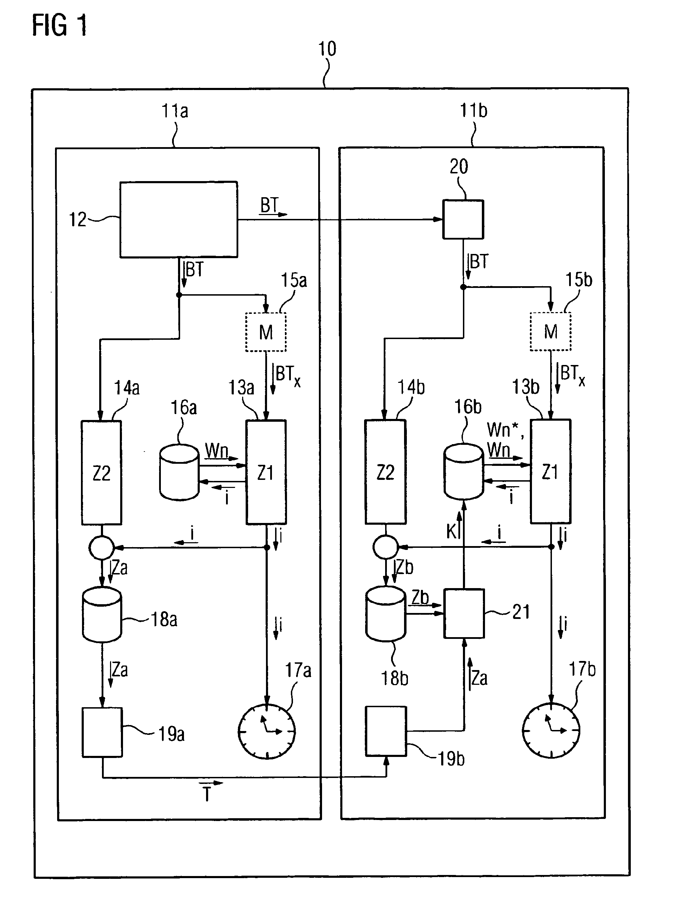

Figur 1 zeigt in schematischer Ansicht ein Automatisierungsgerät 10, bei dem es sich beispielsweise um ein Schutzgerät für eine energietechnische Anlage handeln kann. Das Automatisierungsgerät 10 umfasst in dem Beispiel gemäß Figur 1 zwei Baugruppen 11a und 11b, von denen die Baugruppe 11a im Folgenden als "ausgewählte Baugruppe" und die Baugruppe 11b als "weitere Baugruppe" bezeichnet wird. Während bei dem Ausführungsbeispiel gemäß Figur 1 lediglich eine weitere Baugruppe in dem Automatisierungsgerät 10 vorgesehen ist, können im Rahmen der Erfindung beliebig viele weitere Baugruppen entsprechend der Baugruppe 11b vorgesehen sein. Auch das Vorsehen weiterer ausgewählter Baugruppen entsprechend der Baugruppe 11a kann zu Redundanzzwecken vorteilhaft sein; dies wird zu einem späteren Zeitpunkt erläutert.

Beide Baugruppen 11a und 11b des Automatisierungsgerätes 10 sind so genannte intelligente Baugruppen, das heißt, sie umfassen jeweils zumindest einen (in Figur 1 der Übersichtlichkeit halber nicht dargestellten) Mikroprozessor, der ein baugruppenspezifisches Steuerprogramm ausführt, um beispielsweise Funktionen zur Datenerfassung, zur Kommunikation oder zur Datenverarbeitung durchzuführen. Im Falle eines Schutzgerätes für eine energietechnische Anlage können Funktionen zur Datenverarbeitung beispielsweise Schutzalgorithmen sein, die ausgeführt werden, um fehlerhafte Zustände der energietechnischen Anlage automatisch zu erkennen und abschalten zu können.

Jede Baugruppe 11a und 11b des Automatisierungsgerätes 10 benötigt zur Durchführung ihrer Funktionen einen so genannten Baugruppen-Zeittakt, der beispielsweise zur Zeitstempelung erfasster Daten, zur zeitgenauen Übertragung von Datentelegrammen oder zum Anstoß von Funktionen oder Unterfunktionen der Datenverarbeitung benötigt wird. Für eine ordnungsgemäße Funktionsweise des Automatisierungsgerätes 10 ist es ferner vonnöten, dass alle Baugruppen 11a und 11b mit einem synchronen Baugruppen-Zeittakt arbeiten, das heißt die einzelnen Baugruppen-Zeittakte der Baugruppen 11a und 11b müssen einerseits dieselbe Frequenz aufweisen und andererseits Impulse jeweils zu exakt demselben Zeitpunkt erzeugen. Für die Zeitstempelung von erfassten Datenwerten ist es ferner notwendig, einen durch den jeweiligen Baugruppen-Zeittakt angesteuerten Baugruppen-Zeitgeber synchron mit allen anderen Baugruppen-Zeitgebern zu steuern, das heißt die Zeitgeber aller Baugruppen müssen zu demselben Zeitpunkt denselben Wert liefern.

Im Folgenden werden bezüglich der Baugruppen 11a und 11b ausschließlich die zur Zeitsynchronisation verwendeten Komponenten beschrieben, weitere Komponenten, die zur Datenerfassung, -kommunikation und Datenverarbeitung bezüglich anderer Funktionen der Baugruppe eingesetzt werden, sind selbstverständlich auf den Baugruppen 11a und 11b vorhanden, werden aber zur Erläuterung des Verfahrens zur Zeitsynchronisation nicht betrachtet und sind daher in der Figur 1 auch nicht dargestellt.

Die in Figur 1 gezeigte ausgewählte Baugruppe 11a weist einen Basis-Taktgenerator 12 zur Erzeugung eines Basis-Zeittaktes BT auf, bei dem es sich beispielsweise um einen mit einer konstanten Grundfrequenz schwingenden Quarzkristall handeln kann.

Dem Basis-Taktgenerator 12 sind ein erster Zähler 13a und ein zweiter Zähler 14a nachgeordnet. Optional kann dem ersten Zähler 13a ein Taktmultiplikator 15a vorgeschaltet sein. Dem ersten Zähler 13a ist ferner ein Neustart-Speicher 16a zugeordnet, der einen Neustart-Zählerwert $W_n$ für den ersten Zähler 13a bereitstellt. Dem ersten Zähler 13a ist ferner ein Baugruppen-Zeitgeber 17a nachgeordnet. Dem zweiten Zähler 14a ist ein Speicher 18a nachgeordnet.

Die Baugruppe 11a verfügt ferner über eine Kommunikationseinrichtung 19a zur Kommunikation mit der weiteren Baugruppe 11b.

Der Aufbau der weiteren Baugruppe 11b entspricht im Wesentlichen dem Aufbau der ausgewählten Baugruppe 11a. So umfasst auch die weitere Baugruppe 11b einen ersten Zähler 13b, dem optional ein Taktmultiplikator 15b vorgeschaltet ist, einen zweiten Zähler 14b, einen Neustart-Speicher 16b, einen Baugruppen-Zeitgeber 17b, einen Speicher 18b und eine Kommunikationseinrichtung 19b.

Die zweiten Zähler 14a und 14b der beiden Baugruppen sind als kohärente Zähler ausgebildet, das heißt, wenn sie mit demselben Zeittakt angesteuert werden, weisen sie zu einem gemeinsamen Abfragezeitpunkt übereinstimmende Zählerwerte auf.

Im Gegensatz zur ausgewählten Baugruppe 11a verfügt die weitere Baugruppe 11b nicht über einen Basis-Taktgenerator entsprechend dem Basis-Taktgenerator 12 der ausgewählten Baugruppe 11a. Dafür weist die weitere Baugruppe 11b eine Zeittakt-Schnittstelle 20 auf, die zum Empfang und zur Weiterleitung des Basis-Zeittaktes BT von dem Basis- Taktgenerator 12 der ausgewählten Baugruppe 11a eingerichtet ist. Ferner weist die weitere Baugruppe 11b eine Korrektureinrichtung 21 zur Ermittlung eines Korrekturwertes K auf. Die Korrektureinrichtung 21 hat Schreibzugriff auf den Neustart-Speicher 16b.

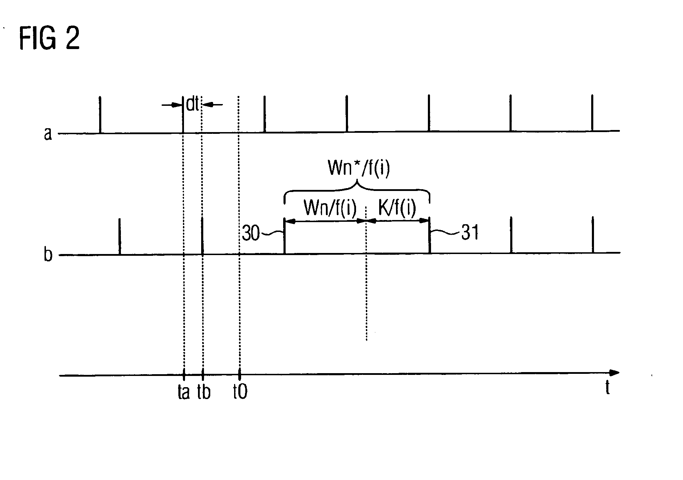

Im Folgenden soll anhand der Figur 1 unter Hinzunahme der Figur 2 die Funktionsweise der Zeitsynchronisierung in dem Automatisierungsgerät 10 erläutert werden.

Der Basis-Taktgenerator 12 auf der ausgewählten Baugruppe 11a erzeugt kontinuierlich einen konstanten Basis-Zeittakt BT. Beispielhaft sei angenommen, dass der Basis-Zeittakt BT eine Frequenz von 32,768 MHz aufweist, das heißt, von dem Basis-Taktgenerator 12 werden innerhalb einer Sekunde 32.768.000 Impulse abgegeben.

Die Impulse des Basis-Zeittaktes BT werden dem ersten Zähler 13a der ausgewählten Baugruppe 11a zugeführt. Optional, aber nicht zwingend notwendig, kann die Frequenz des Basis-Zeittakts BT zuvor mittels des Taktmultiplikators 15a, bei dem es sich beispielsweise um einen fest eingestellten, so genannten PLL (Phase-locked Loop = Phasenregelschleife) handeln kann, um einen konstanten Faktor vergrößert. Im Ausführungsbeispiel der Figur 1 sei angenommen, dass der Basis-Zeittakt BT in dem Taktmultiplikator 15a um einen Faktor 6 vergrößert werden soll, so dass ausgangsseitig an dem Taktmultiplikator 15a ein erhöhter Basis-Zeittakt $BT_x$ mit einer Frequenz von 196,608 MHz anliegt. Durch die Erhöhung des Basis-Zeittaktes vor der Zuführung zum ersten Zähler 13a kann die Genauigkeit des im Folgenden weiter beschriebenen Verfahrens zur Zeitsynchronisierung erhöht werden.

Der erste Zähler 13a ist derart eingerichtet, dass jeder Impuls des zugeführten erhöhten Basis-Zeittaktes $BT_x$ eine inkrementelle Verringerung des Zählerstandes des ersten Zählers bewirkt. Mit anderen Worten zählt der erste Zähler ausgehend von einem Anfangswert bei jedem Impuls des erhöhten Basis-Zeittaktes $BT_x$ einen Schritt rückwärts, bis er schließlich beim Wert Null angelangt ist. Der ursprüngliche Anfangswert des ersten Zählers 13a ist in dem Neustart-Speicher 16a als Neustart-Zählerwert $W_n$ abgelegt und wird dem ersten Zähler 13a bereitgestellt.

Der Basis-Zeittakt BT wird mit unveränderter Frequenz auch dem zweiten Zähler 14a zugeführt, der derart eingerichtet ist, dass er bei jedem Impuls des Basis-Zeittaktes BT seinen Zählerstand inkrementell um einen Wert erhöht.

Wenn der Zählerstand des ersten Zählers 13a den Wert Null erreicht, wird von dem ersten Zähler 13a ein Zeitimpuls i erzeugt, der folgende Reaktionen bewirkt. Einerseits wird der Zeitimpuls i dem Neustart-Speicher 16a zugeführt und bewirkt dort, dass der in dem Neustart-Speicher 16a vorhandene Neustart-Zählerwert $W_n$ in das Register des ersten Zählers 13a als neuer Anfangswert eingetragen wird, so dass der erste Zähler 13a beim Empfang des nächsten Taktimpulses des erhöhten Basis-Zeittaktes $BT_x$ einen neuen Durchlauf beginnt und erneut von diesem Anfangswert herunterzählt. Mit anderen Worten gesagt, findet immer dann, wenn der Zählerstand des ersten Zählers 13a den Wert Null erreicht hat, ein Neuladen des ersten Zählers mit dem Neustart-Zählerwert $W_n$ als Anfangswert statt, so dass ein neuer Durchlauf des Herunterzählens für den ersten Zähler 13a beginnt.

Der Zeitimpuls i bewirkt außerdem, dass der im zweiten Speicher 14a vorhandene Zählerstand in dem Speicher 18a abgelegt wird.

Schließlich ist es von Vorteil, wenn der Zeitimpuls i auch dem Baugruppen-Zeitgeber 17a zugeführt wird, bei dem es sich im einfachsten Fall um einen Zähler der Zeitimpulse i handeln kann. Wenn der Anfangswert des ersten Zählers 13a, also der Neustart-Zählerwert $W_n$ in dem Neustart-Speicher 16a entsprechend festgelegt ist, kann erreicht werden, dass die Zeitimpulse i in einem gewünschten Zeitabstand erzeugt werden. So kann bei Auswahl des Wertes 196.608 als Neustart-Zählerwert $W_n$ erreicht werden, dass bei einem erhöhten Basis-Zeittakt $BT_x$ von 196,608 MHz der Zeitimpuls i jeweils nach Ablauf einer Millisekunde erzeugt wird. Mit anderen Worten gibt der erste Zähler 13a in diesem Fall einen Baugruppen-Zeittakt mit einer Frequenz von einem kHz (also 1 Zeitimpuls i pro Millisekunde) ab. Dadurch kann erreicht werden, dass der Baugruppen-Zeitgeber 17a als Millisekundenzähler betrieben wird. Der von dem ersten Zähler 13a der ausgewählten Baugruppe 11a abgegebene Baugruppen-Zeittakt mit den Zeitimpulsen i ist in Figur 2, die die Baugruppen-Zeittakte der ausgewählten und der weiteren Baugruppe 11a und 11b auf einer Zeitachse darstellt, in der mit a bezeichneten Reihe gezeigt.

Der im Basis-Taktgenerator 12 erzeugte Basis-Zeittakt BT wird über die Zeittakt-Schnittstelle 20 auch der weiteren Baugruppe 11b zugeführt und von dort, gegebenenfalls nach Anpassung durch den Taktmultiplikator 15b, dem ersten Zähler 13b sowie dem zweiten Zähler 14b zugeführt. Hinsichtlich des Vorhandenseins eines Taktmultiplikators ist zu beachten, dass dieser entweder auf allen Baugruppen vorhanden sein oder fehlen muss, um die korrekte Funktionsweise der Zeitsynchronisation ermöglichen.

Wie bereits zu der ausgewählten Baugruppe 11a erläutert, bewirkt der dem ersten Zähler 13b zugeführte erhöhte Basis-Zeittakt $BT_x$ ein inkrementelles Herunterzählen des ersten Zählers 13b, während der dem zweiten Zähler 14b zugeführte Basis-Zeittakt ein inkrementelles Erhöhen des Zählerstandes des zweiten Zählers 14b bewirkt. Analog zur Darstellung bezüglich der ausgewählten Baugruppe 11a bewirkt das Erreichen eines Zählerstandes von Null im ersten Zähler 13b auf der weiteren Baugruppe 11b das Abgeben eines Zeitimpulses i, wodurch einerseits der in dem Neustart-Speicher 16b vorhandene Neustart-Zählerwert $W_n$ als neuer Anfangswert in dem Register des ersten Zählers 13b eingetragen wird und andererseits der aktuelle Zählerstand des zweiten Zählers 14b in dem Speicher 18b abgespeichert wird. Ebenfalls kann der Zeitimpuls i zur Ansteuerung des Baugruppen-Zeitgebers 17b der weiteren Baugruppe 11b verwendet werden. Sofern die in den Neustart-Speichern 16a und 16b bereitgestellten Neustart-Zählerwerte denselben Wert haben, ist gewährleistet, dass die Frequenz, mit der die Zeitimpulse i von dem ersten Zähler 13a der ausgewählten Baugruppe 11a und dem ersten Zähler 13b der weiteren Baugruppe 11b abgegeben werden, übereinstimmt. Dies resultiert daraus, dass dem ersten Zähler 13a und 13b auf der ausgewählten Baugruppe 11a und der weiteren Baugruppe 11b jeweils derselbe erhöhte Basis-Zeittakt $BT_x$ zugeführt wird.

In Figur 2 ist in Reihe b der von dem ersten Zähler 13b der weiteren Baugruppe 11b abgegebene Baugruppen-Zeittakt mit den Zeitimpulsen i dargestellt. Wie man bei Betrachtung der jeweils ersten Zeitimpulse i der beiden Baugruppen-Zeittakte in den Reihen a und b der Figur 2 erkennt, kann auch bei übereinstimmender Frequenz der beiden Baugruppen-Zeittakte eine konstante zeitliche Verschiebung der Zeitpunkte vorliegen, zu denen die einzelnen Zeitimpulse i von dem ersten Zähler 13a der ausgewählten Baugruppe 11a und dem ersten Zähler 13b der weiteren Baugruppe 11b erzeugt werden. Diese Zeitverschiebung soll im Zuge der Zeitsynchronisation behoben werden, so dass die Zeitimpulse i nach erfolgter Synchronisation sowohl mit derselben Frequenz als auch zu übereinstimmenden Zeitpunkten, also synchron zueinander, erzeugt werden.

Hierzu sei angenommen, dass zu einem Zeitpunkt $t_a$ (vgl. Figur 2) der erste Zähler 13a der ausgewählten Baugruppe 11a einen Zählerstand mit dem Wert Null annimmt und einen Zeitimpuls i abgibt. Wie bereits erläutert, bewirkt dieser Zeitimpuls i auf der ausgewählten Baugruppe 11a, dass der aktuell im zweiten Zähler 14a vorliegende Zählerstand $Z_a$ in den Speicher 18a übernommen wird.

Der Zeitimpuls i, der von dem ersten Speicher 13a der ausgewählten Baugruppe 11a abgegeben wird, bewirkt außerdem, dass von der Kommunikationseinrichtung 19a ein Zeitsteuertelegramm T abgegeben wird, das zumindest als einen Bestandteil den in dem Speicher 18a vorliegenden Zählerstand $Z_a$ des zweiten Speichers 14a enthält. Dieses Zeitsteuertelegramm T wird an die Kommunikationseinrichtung 19b der weiteren Baugruppe 11b übertragen, die daraus den Zählerstand $Z_a$ des zweiten Zählers 14a der ausgewählten Baugruppe 11a entnimmt und einem Eingang der Korrektureinrichtung 21 der weiteren Baugruppe 11b zuführt.

Zu einem auf den Zeitpunkt $t_a$ folgenden Zeitpunkt $t_b$ erreicht der Zählerstand des ersten Zählers 13b der weiteren Baugruppe 11b den Wert Null, so dass der erste Zähler 13b der weiteren Baugruppe 11b einen Zeitimpuls i erzeugt, der bewirkt, dass der aktuell in dem zweiten Zähler 14b der weiteren Baugruppe 11b vorhandene Zählerstand $Z_b$ in dem Speicher 18b abgelegt wird. Der im Speicher 18b abgelegte Zählerstand $Z_b$ des zweiten Zählers 14b der weiteren Baugruppe 11b wird daraufhin einem weiteren Eingang der Korrektureinrichtung 21 zugeführt.

Anhand der beiden Zählerstände $Z_a$ und $Z_b$ der zweiten Zähler 14a und 14b der ausgewählten Baugruppe 11a und der weiteren Baugruppe 11b ermittelt die Korrektureinrichtung 21 einen Korrekturwert K. Dieser Korrekturwert K wird daraufhin dem Neustart-Speicher 16b zugeführt und dazu verwendet, für einen einmaligen Durchlauf des ersten Zählers 13b einen modifizierten Neustart-Zählerwert $W_n^*$ zu erzeugen, der sich als Summe des eigentlichen Neustart-Zählerwertes $W_n$ und des Korrekturwertes K ergibt:

$$W_n^* = W_n + K.$$

Beispielhaft sei angenommen, dass zum Zeitpunkt $t_0$ (vgl. Figur 2) der Korrekturwert K aus dem in dem Zeitsteuertelegramm T enthaltenen Zählerstand $Z_a$ des zweiten Zählers 14a der ausgewählten Baugruppe 11a und dem Zählerstand $Z_b$ des zweiten Zählers 14b der weiteren Baugruppe 11b gebildet wird. Daraufhin wird für einen einmaligen Durchlauf der Neustart-Zählerwert $W_n$ in dem Speicher 16b um den Korrekturwert K erhöht, so dass dem ersten Zähler 13b der weiteren Baugruppe 11b für den nächsten Durchlauf der entsprechend erhöhte modifizierte Neustart-Zählerwert $W_n^*$ zugeführt wird. In Reihe b der Figur 2 erkennt man deutlich, dass hierdurch das auf den Zeitpunkt $t_0$, zu dem der Korrekturwert K gebildet worden ist, nächstfolgende Zeitintervall zwischen dem Zeitimpuls i (Bezugszeichen 30) und dem nächsten Zeitimpuls i (Bezugszeichen 31) des ersten Zählers 13b der weiteren Baugruppe 11b entsprechend verlängert ist, so dass dieses Zeitintervall nunmehr eine Korrekturzeitdauer $T_k$ von

$$T_k = W_n^*/f(i) = W_n/f(i) + K/f(i)$$

aufweist, mit
$W_n^*$ = modifizierter Neustart-Zählerwert,
$W_n$ = üblicher Neustart-Zählerwert,
$f(i)$ = Frequenz der Zeitimpulse i.

Durch diese Verschiebung der Erzeugung des Zeitimpulses 31 wird die Synchronität zwischen den Zeitimpulsen i des Baugruppen-Zeittaktes der ausgewählten Baugruppe 11a und den Zeitimpulsen i des Baugruppen-Zeittaktes der weiteren Baugruppe 11b erreicht. Wie Figur 2 zu entnehmen ist, werden ab dem Zeitimpuls i mit dem Bezugszeichen 31 die Zeitimpulse i beider Baugruppen absolut synchron zueinander erzeugt.

Zur Gewährleistung der synchronen Erzeugung der ab dem Zeitimpuls 31 folgenden Zeitimpulse des ersten Zählers 13b der weiteren Baugruppe 11b muss der für das auf den Zeitimpuls 31 folgende Zeitintervall verwendete Neustart-Zählerwert $W_n$ wieder seinen ursprünglichen Wert annehmen; dieser ist dann für alle zukünftigen Zeitintervalle beizubehalten, sofern nicht erneut eine Abweichung zwischen den Zeitpunkten der Erzeugung der Zeitimpulse der beiden Baugruppen auftritt.

Im Folgenden wird die Bildung des Korrekturwertes K erläutert. Zum Zeitpunkt $t_b$ gilt folgende Bedingung:

$$Z_a + n^* + Z(dt) = Z_b + n^*$$

mit

$Z_a$ = Zählerstand des zweiten Zählers 14a der ausgewählten Baugruppe 11a,
$Z_b$ = Zählerstand des zweiten Zählers 14b der weiteren Baugruppe 11b,
$n^*$ = Anzahl von Impulsen des Basis-Zeittaktes BT, die zwischen zwei Zeitimpulsen i abgegeben werden, $n^*$ besitzt den Wert 32.768 sofern der Basis-Zeittakt BT mit einer Frequenz von 32,768 MHz erzeugt wird,

dt = zeitliche Verschiebung zwischen der Erzeugung der Zeitimpulse i der beiden Baugruppen,

Z(dt) = Zählerstandänderung der zweiten Zähler 14a bzw. 14b während der zeitlichen Verschiebung dt.

Der Term Z(dt) kann durch Anwendung der Modulo-Funktion "mod" wie folgt ermittelt werden, um die Berechnung des Korrekurwertes K zu beliebigen Zeitpunkten durchführen zu können. Hierdurch erfolgt eine korrekte Ermittlung auch dann, wenn ein Zeittelegramm ausgefallen sein sollte und sich der Vergleich der Zählerstände der zweiten Zähler 14a und 14b entsprechend um einen oder mehrere Zeittakte i verschieben sollte.

$$Z(dt) = (Z_b - Z_a) \bmod n*.$$

Der Korrekturwert K wird hieraus berechnet gemäß

$$K = F * Z(dt),$$

wobei F den Faktor angibt, um den die Taktmultiplikatoren 15a bzw. 15b den Basis-Zeittakt vor seiner Zuführung zum jeweiligen ersten Zähler 13a bzw. 13b erhöhen. Fehlt ein solcher Taktmultiplikator, so nimmt F den Wert 1 an.

Auf die beschriebene Weise kann sowohl beim erstmaligen Anlauf des Automatisierungsgerätes 10 als auch bei einem Neustart einer oder aller Baugruppen eine Zeitsynchronisation zwischen den Baugruppen-Zeittakten hergestellt werden.

Die Baugruppen-Zeittakte werden wie beschrieben auch zur Ansteuerung der Baugruppen-Zeitgeber 17a und 17b verwendet, die in dem dargestellten Ausführungsbeispiel als Millisekundenzähler betrieben werden. Um die Zeitgeber 17a und 17b synchron zueinander zu halten, kann das Zeitsteuertelegramm T zusätzlich zu dem Zählerstand $Z_a$ auch den Wert des Zeitgebers 17a der ausgewählten Baugruppe umfassen. Um den Zeitgeber 17b der weiteren Baugruppe daran anzupassen, muss dessen Wert bei dem nächsten Zeitimpuls i des ersten Zählers 13b der weiteren Baugruppe 11b auf den um 1 erhöhten übermittelten Wert des Zeitgebers 17a gesetzt werden.

Neben der Ansteuerung der Baugruppen-Zeitgeber 17a bzw. 17b können die Zeitimpulse i auch zur Ansteuerung von in Figur 1 nicht gezeigten Baugruppenuhren verwendet werden, die eine jeweilige Angabe der Uhrzeit vornehmen, so dass beispielsweise eine genaue Zeitstempelung erfasster Datenwerte erfolgen kann. Zur Synchronisierung der durch die Baugruppenuhren angegebenen Uhrzeit kann von der ausgewählten Baugruppe 11a mit dem Zeitsteuertelegramm T zusätzlich eine Information über die Baugruppenuhrzeit der ausgewählten Baugruppe 11a an die weitere Baugruppe 11b übertragen werden. Der Wert der Baugruppenuhr der weiteren Baugruppe muss dann beim nächsten Zeitimpuls i des ersten Zählers 13b der weiteren Baugruppe 11b auf einen entsprechend um 1ms erhöhten Wert gesetzt werden.

Um die Baugruppenuhren auch mit einer externen absoluten Uhr zu synchronisieren, kann auf der ausgewählten Baugruppe ferner eine Schnittstelle zum Empfang eines externen Uhrzeitsignals, das beispielsweise aus einem GPS-Signal oder einem entsprechenden Zeitsignal eines Kommunikationsnetzwerkes (z.B. eines Real-Time-Ethernet-Netzwerkes) abgeleitet worden ist, vorgesehen sein. Mit dem externen Uhrzeitsignal kann eine Synchronisierung der Baugruppenuhr der ausgewählten Baugruppe 11a durchgeführt werden, an die daraufhin durch die Zeitsteuertelegramme T die Baugruppenuhr der weiteren Baugruppe 11b angepasst wird.

Wie eingangs bereits erwähnt, kann das beschriebene Verfahren zur Zeitsynchronisierung auch bei mehr als einer weiteren Baugruppe durchgeführt werden. Die entsprechenden Verfahrensschritte werden entsprechend der für die weitere Baugruppe 11b beschriebenen Verfahrensschritte durchgeführt.

Um eine Redundanz des Basis-Zeittaktes BT, von dem letztendlich die Baugruppen-Zeittakte aller Baugruppen abgeleitet werden, herzustellen, können ferner in dem Automatisierungsgerät 10 auch eine oder mehrere zusätzlich ausgewählte Baugruppen vorhanden sein, von denen eine bei einem Ausfall des Basis-Taktgenerators 12 der ursprünglichen ausgewählten Baugruppe 11a (beispielsweise wegen eines Defekts der kompletten Baugruppe 11a) einen entsprechenden Basis-Zeittakt BT erzeugt und den vorhandenen weiteren Baugruppen zuführt. Durch das oben beschriebene Zeitsynchronisierungsverfahren kann sehr schnell erreicht werden, dass die weiteren Baugruppen an den Baugruppenzeittakt der neuen ausgewählten Baugruppe angepasst werden; hierzu muss die neue ausgewählte Baugruppe lediglich die bisherigen Funktionen zur Zeitsynchronisation der bisherigen ausgewählten Baugruppe 11a übernehmen. Insbesondere muss die neue ausgewählte Baugruppe den Zählerstand ihres zweiten Zählerstands aus dem Speicher abfragen und an die weiteren Baugruppen übertragen. Die Synchronisation erfolgt dann wie oben bereits beschrieben.

Ein besonderer Vorteil des beschriebenen Verfahrens ist, dass an das Kommunikationsmedium zwischen den einzelnen Baugruppen 11a und 11b, über das die Kommunikationseinrichtungen 19a und 19b miteinander kommunizieren, keine besonderen Anforderungen gestellt werden müssen. Insbesondere muss es sich nicht um eine zeitdeterministische Kommunikationsverbindung handeln. Das beschriebene Verfahren funktioniert nämlich unabhängig davon, wie lange das Zeitsteuertelegramm T zur Übertragung zwischen den Baugruppen benötigt; beispielsweise auch dann, wenn das Zeitsteuertelegramm erst zum Zeitpunkt $t_0$ (Figur 2) die weitere Baugruppe 11b erreicht. Selbst beim Ausfall eines Zeitsteuertelegramms T kann das Verfahren mit dem nächsten korrekt übertragenen Zeitsteuertelegramm problemlos durchgeführt werden.

**Patentansprüche**

1. Verfahren zur Zeitsynchronisation in einem Automatisierungsgerät (10), bei dem ein auf einer ausgewählten Baugruppe (11a) des Automatisierungsgerätes (10) erzeugter Basis-Zeittakt an zumindest eine weitere Baugruppe (11b) des Automatisierungsgerätes (10) übermittelt und zur Synchronisation eines Baugruppen-Zeittaktes der zumindest einen weiteren Baugruppe (11b) mit einem Baugruppen-Zeittakt der ausgewählten Baugruppe (11a) verwendet wird, wobei die folgenden Schritte durchgeführt werden:

   - die Impulse des Basis-Zeittaktes werden je einem ersten Zähler (13a, 13b) der ausgewählten (11a) und der zumindest einen weiteren Baugruppe (11b) zugeführt und bewirken dort ein inkrementelles Verringern des Zählerstandes des jeweiligen ersten Zählers (13a, 13b);
   - die Impulse des Basis-Zeittaktes werden je einem zweiten Zähler (14a, 14b) der ausgewählten (11a) und der zumindest einen weiteren Baugruppe (11b) zugeführt und bewirken dort ein inkrementelles Erhöhen des Zählerstandes des jeweiligen zweiten Zählers (14a, 14b);
   - bei Erreichen eines Zählerstandes mit dem Wert Null des jeweiligen ersten Zählers (13a, 13b) wird jeweils ein Zeitimpuls generiert, aus dem der jeweilige Baugruppen-Zeittakt erzeugt wird;
   - als Reaktion auf den Zeitimpuls werden auf der ausgewählten (11a) und der zumindest einen weiteren Baugruppe (11b)

      - der Zählerstand des jeweiligen zweiten Zählers (14a, 14b) in einem Speicher (18a, 18b) abgelegt; und
      - ein in jeweils einem Neustart-Speicher (16a, 16b) vorhandener Neustart-Zählerwert in den jeweiligen ersten Zähler (13a, 13b) übernommen;

   - als Reaktion auf den Zeitimpuls wird auf der ausgewählten Baugruppe (11a) zusätzlich ein Zeitsteuertelegramm erzeugt, das den aktuell in dem Speicher (18a) abgelegten Zählerstand des zweiten Zählers (14a) der ausgewählten Baugruppe (11a) enthält, und an die zumindest eine weitere Baugruppe (11b) übermittelt;
   - auf der zumindest einen weiteren Baugruppe (11b) wird der mit dem Zeitsteuertelegramm empfangene Zählerstand des zweiten Zählers (14a) der ausgewählten Baugruppe (11a) mit dem Zählerstand des jeweiligen eigenen zweiten Zählers (14b) verglichen;
   - aus dem Unterschied zwischen den jeweiligen Zählerständen wird ein Korrekturwert bestimmt; und
   - der Korrekturwert wird zum Herstellen der Zeitsynchronisation für einen einmaligen Durchlauf des jeweiligen ersten Zählers (13b) zu dem in dem jeweiligen Neustart-Speicher (16b) der zumindest einen weiteren Baugruppe (11b) vorhandenen Neustart-Zählerwert addiert.

2. Verfahren nach Anspruch 1,
   **dadurch gekennzeichnet, dass**

   - der Neustart-Zählerwert derart gewählt wird, dass unter Berücksichtigung der Frequenz des Basis-Zeittaktes das Erzeugen des Zeitimpulses jeweils nach Ablauf einer ausgewählten Zeitdauer erfolgt; und
   - als Reaktion auf den jeweiligen Zeitimpuls der Wert eines jeweiligen Baugruppen-Zeitgebers (17a, 17b) der ausgewählten (11a) und der zumindest einen weiteren Baugruppe (11b) um einen der Zeitdauer entsprechenden Zeitschritt erhöht wird.

3. Verfahren nach Anspruch 1 oder 2,
   **dadurch gekennzeichnet, dass**

   - die Impulse des Basis-Zeittaktes auf der ausgewählten (11a) und der zumindest einen weiteren Baugruppe (11b) je einem Taktmultiplikator (15a, 15b) zugeführt werden, der eine Vervielfachung der Frequenz des Basis-Zeittaktes um den Wert F vornimmt; und

- der entsprechend erhöhte Basis-Zeittakt als Zeittakt für den jeweiligen ersten Zähler (13a, 13b) verwendet wird.

4. Verfahren nach einem der vorangehenden Ansprüche, **dadurch gekennzeichnet, dass**

- eine weitere ausgewählte Baugruppe vorhanden ist, die zur Erzeugung eines entsprechenden Basis-Zeittaktes eingerichtet ist; und
- bei Ausfall des Basis-Zeittaktes der ersten ausgewählten Baugruppe (11a) die weitere ausgewählte Baugruppe ihren Basis-Zeittakt an die zumindest eine weitere Baugruppe (11b) übermittelt und die bisher von der ersten ausgewählten Baugruppe (11a) durchgeführten Schritte zur Zeitsynchronisation ausführt.

5. Automatisierungsgerät (10) mit zumindest zwei internen Baugruppen (11a, 11b), wobei eine ausgewählte (11a) der beiden Baugruppen zur Erzeugung eines Basis-Zeittaktes und zur Übermittlung des Basis-Zeittaktes an die zumindest eine weitere Baugruppe (11b) eingerichtet ist,
**dadurch gekennzeichnet, dass**

- die ausgewählte (11a) und die zumindest eine weitere Baugruppe (11b) zur Durchführung eines Verfahrens zur Zeitsynchronisation entsprechend einem der Ansprüche 1 bis 4 eingerichtet sind.

**Claims**

1. Method for time synchronization in an automation device (10), in which method a base timing clock signal produced on a selected module (11a) of the automation device (10) is transmitted to at least one further module (11b) of the automation device (10) and is used for synchronizing a module timing clock signal of the at least one further module (11b) with a module timing clock signal of the selected module (11a), wherein the following steps are implemented:

- the pulses of the base timing clock signal are supplied in each case to a first counter (13a, 13b) of the selected module (11a) and the at least one further module (11b) and there effect an incremental reduction in the counter reading of the respective first counter (13a, 13b);
- the pulses of the base timing clock signal are supplied in each case to a second counter (14a, 14b) of the selected module (11a) and the at least one further module (11b) and there effect an incremental increase in the counter reading of the respective second counter (14a, 14b);
- when a counter reading with the value zero of the respective first counter (13a, 13b) is reached, in each case one time pulse is generated, from which the respective module timing clock signal is produced;
- in response to the time pulse, on the selected module (11a) and the at least one further module (11b)

  - the counter reading of the respective second counter (14a, 14b) is stored in a memory (18a, 18b); and

- a restart counter value provided in a respective restart memory (16a, 16b) is transferred to the respective first counter (13a, 13b);
- in response to the time pulse, on the selected module (11a) a time control telegram is additionally produced, which contains the counter reading of the second counter (14a) of the selected module (11a) stored presently in the memory (18a), and this time control telegram is transmitted to the at least one further module (11b);
- on the at least one further module (11b), the counter reading of the second counter (14a) of the selected module (11a) which is received with the time control telegram is compared with the counter reading of the respective dedicated second counter (14b);
- a correction value is determined from the difference between the respective counter readings; and
- the correction value is added to the restart counter value, which is provided in the respective restart memory (16b) of the at least one further module (11b), in order to produce the time synchronization for a single run of the respective first counter (13b).

2. Method according to Claim 1,
**characterized in that**

- the restart counter value is selected such that the time pulse is produced, in each case once a selected period of time has elapsed, taking into consideration the frequency of the base timing clock signal; and
- in response to the respective time pulse, the value of a respective module timing element (17a, 17b) of the selected module (11a) and the at least one further module (11b) is increased by a time increment corresponding to the period of time.

3.  Method according to Claim 1 or 2,
    **characterized in that**

    - the pulses of the base timing clock signal on the selected module (11a) and the at least one further module (11b) are supplied to in each case one clock signal multiplier (15a, 15b), which multiplies the frequency of the base timing clock signal by the value F; and
    - the correspondingly increased base timing clock signal is used as timing clock signal for the respective first counter (13a, 13b).

4.  Method according to one of the preceding claims, **characterized in that**

    - a further selected module is provided which is designed to produce a corresponding base timing clock signal; and
    - in the event of failure of the base timing clock signal of the first selected module (11a), the further selected module transmits its base timing clock signal to the at least one further module (11b) and implements the steps for time synchronization which were previously performed by the first selected module (11a).

5.  Automation device (10) with at least two internal modules (11a, 11b), a selected one (11a) of the two modules being designed for producing a base timing clock signal and for transmitting the base timing clock signal to the at least one further module (11b),
    **characterized in that**

    - the selected module (11a) and the at least one further module (11b) are designed for implementing a method for time synchronization corresponding to one of Claims 1 to 4.


**Revendications**

1.  Procédé de synchronisation temporelle dans un appareil d'automatisation, dans lequel on transmet une cadence temporelle de base produite sur un module (11a ) sélectionné de l'appareil 10 ) d'automatisation à au moins un autre module ( 11b ) de l'appareil 10 ) d'automatisation et on l'utilise pour la synchronisation d'une cadence temporelle de module du au moins un autre module (11b ) avec une cadence temporelle du module ( 11a ) sélectionné, dans lequel on effectue les stades suivants :

    - on envoie les impulsions de la cadence temporelle de base respectivement à un premier compteur (13a, 13b ) du module (11a ) sélectionné et du au moins un autre module (11b ) et on y provoque un diminution incrémentielle de l'état du premier compteur (13a, 13b ) respectif ;
    - on envoie les impulsions de la cadence temporelle de base respectivement à un deuxième compteur (14a, 14b ) du module (11a ) sélectionné et du au moins un autre module (11b ) et on y provoque une augmentation incrémentielle de l'état du deuxième compteur (14a, 14b ) respectif ;
    - lorsqu'on atteint un état ayant la valeur zéro du premier compteur ( 13a, 13b ) respectif, on produit une impulsion temporelle à partir de laquelle la cadence temporelle respective de module est produite ;
    - en réaction à l'impulsion temporelle sur le module (11a ) sélectionné, le ou moins un autre module (11b ) ;

        - on met l'état du deuxième compteur ( 14a, 14b ) respectif dans une mémoire (18a, 18b ) ; et
        - une valeur de compteur nouveau départ présente respectivement dans une mémoire ( 16a, 16b ) nouveau départ est prise en charge dans le premier compteur ( 13a, 13b ) respectif ;

    - en réaction à l'impulsion temporelle, on produit sur le module (11a ) sélectionné en outre un télégramme de commande temporelle, qui contient l'état mis présentement dans la mémoire (18a ) du deuxième compteur (14a ) du module (11a ) sélectionné et on le transmet à au moins un autre module (11b ) ;
    - sur le au moins un autre module (11b ) l'état, reçu avec le télégramme de commande temporelle, du deuxième compteur (14a ) du module (11a ) sélectionné est comparé à l'état du deuxième compteur (14b ) respectif proprement dit ;
    - on détermine une valeur de correction à partir de la différence entre les états respectifs du compteur ;
    - on ajoute, à la valeur de compteur nouveau départ présente dans la mémoire ( 16b ) de nouveau départ respectif du au moins un autre module (11b ), la valeur de correction pour la production de la synchronisation temporelle pour une passe unique du premier compteur (13b ) respectif.

2. Procédé suivant la revendication 1,
**caractérisé en ce que**

- on choisit la valeur de compteur nouveau départ de manière à effectuer, en tenant compte de la fréquence de la cadence temporelle de base, la production de l'impulsion temporelle respectivement après l'expiration d'une durée sélectionnée ;
- en réaction à l'impulsion temporelle respective, on augmente la valeur d'une horloge (17a, 17b ) de module respectif du module (11a ) sélectionné du au moins un autre module (11b) d'un incrément de temps correspondant à la durée.

3. Procédé suivant la revendication 1 ou 2,
**caractérisé en ce que**

- on envoie l'impulsion de la cadence temporelle de base sur le module ( 11a ) sélectionné et sur le au moins un autre module (11b ) à respectivement un multiplicateur (15a, 15b ) de cadence, qui effectue une multiplication de la fréquence de la cadence de base par la valeur F ; et
- on utilise la cadence temporelle de base augmentée en conséquence comme cadence temporelle pour le premier compteur
(13a, 13b ) respectif.

4. Procédé suivant l'une des revendications précédentes, **caractérisé en ce que**

- il y a un autre module sélectionné, qui est conçu pour la production d'une cadence temporelle de base correspondante ;
- en cas de défaillance de la cadence temporelle de base du premier module (11a ) sélectionné, l'autre module sélectionné transmet sa cadence temporelle de base du au moins un autre module (11b ) et exécute pour la synchronisation temporelle les stades effectués jusqu'ici par le premier module (11a )sélectionné.

5. Appareil 10 ) d'automatisation ayant au moins deux modules (11a, 11b ) internes, dans lequel un module (11a ) sélectionné parmi les deux modules est conçu pour la production d'une cadence temporelle de base et pour la transmission de la cadence temporelle de base à au moins un autre module (11b ),
**caractérisé en ce que**

- le module (11a ) sélectionné et le au moins un autre module (11b ) sont conçus pour effectuer un procédé de synchronisation temporelle suivant l'une des revendications 1 à 4.

FIG 1

## FIG 2

$Wn*/f(i)$

$Wn/f(i)$    $K/f(i)$

30     31

$dt$

a

b

ta tb   t0

t

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1143312 A2
- EP 1126341 A1